# EUROPEAN PATENT APPLICATION

(11) **EP 1 452 563 A1**
(43) Date of publication of application: **01.09.2004**
(21) Application number: 02788703.3
(22) Date of filing: 03.12.2002
(51) Int. Cl.: C08L 67/00, C08K 3/02, C08K 3/38, C08K 5/3492, C08K 7/14

(54) **FLAME-RETARDANT RESIN COMPOSITION**

(30) Priority: 07.12.2001 JP 2001374531
(71) Applicant: Win Tech Polymer Ltd., Tokyo 100-6006 (JP)
(72) Inventor: TAGUCHI, Yoshiaki, c/o Polyplastics Co., Ltd., Fuji-shi, Shizuoka 416-8533 (JP); SUZUKI, Katsutoshi, c/o Polyplastics Co., Ltd., Fuji-shi, Shizuoka 416-8533 (JP)
(74) Representative: Mays, Julie
(86) International application number: PCT/JP2002/012619
(87) International publication number: WO 2003/048253

(57) **Abstract**

A flame-retardant resin composition comprises an aromatic polyester-series resin (A), a red phosphorus (B), a flame-retardant auxiliary (C) composed of a metal salt of a boric acid (C-1) and a melamine salt of a cyanuric acid (C-2), and a compound (D) having a standard electrode potential of not less than +0.4 V in aqueous solution system at 25°C. The flame-retardant resin composition may further comprise an inorganic filler (E) and/or an olefinic resin (F). The olefinic resin (F) may have a melt flow rate of 10 to 100 g/10minutes based on JIS K7210. The metal salt of a boric acid (C-1) may be a zinc borate, a calcium borate, etc. The present invention provides a flame-retardant resin composition, as well as a shaped article thereof, having high reliability and being rendered flame-retardant to a satisfactory level.

## Description

### TECHNICAL FIELD

The present invention relates to a flame-retardant resin composition which comprises an aromatic polyester-series resin, a red phosphorus and a flame-retardant auxiliary (a metal salt of a boric acid, and a melamine salt of a cyanuric acid), and a shaped article thereof (such as an electric or electronic device part).

### BACKGROUND ART

Thermoplastic resins have physically and chemically excellent properties, and have been used in large quantities in various fields such as electric, mechanical, automobile and building industries. Recently, high functionality and performance of materials have been sought over a wider industrial field, and more excellent physical properties have been highly required for thermoplastic resins. Among others, safety or reliability for resins or compositions has been highly required. On the occasion of imparting flame retardancy to thermoplastic resins, highly safety or reliability and stability have been required not only in the context of imparting flame retardancy as usual, but also in all contexts from production operation to use of the product, further to incineration or landfill disposal.

For rendering thermoplastic resins flame-retardant, various methods have been proposed. Methods which comprises blending a thermoplastic resin composition with at least one member selected from an organic halogen-containing compound, an organic phosphorus-containing compound and antimony trioxide singly or in combination are in practical use. Among these methods, the main flame retardant techniques include a method of addition of a bromine-series flame retardant as the organic halogen-containing compound in combination with antimony trioxide to a resin composition because the method is applicable to a wider resin from general purpose plastics to engineering plastics independently of species of resins to be used.

However, shaped articles formed with resin compositions composed of the organic halogen-containing compound produce smoke in large quantity and generate a large amount of a noxious gas on combustion. Moreover, it has been revealed that the noxious gas generated contains highly toxic dioxins depending on the cases. From such a back ground, the scope of application of flame retardant techniques incorporating an organic halogen-containing compound has been limited rapidly.

Furthermore, regarding tracking resistance which is a measure of electric insulation, a thermoplastic resin, particularly an aromatic polyester has good properties. When the flame retardancy is imparted by using an organic halogen-containing compound, however, the resin composition is significantly deteriorated in tracking resistance, and causes problems such as reliability.

On the other hand, among phosphorus-series compounds, a red phosphorus imparts effective flame retardancy to a resin composition at relatively small amount, and hardly deteriorates primary flame retardancy and mechanical strength of resins. Further, the red phosphorus is applicable as a flame retardant to a wide range of resins from general-purpose plastics to engineering plastics.

However, a red phosphorus is unstable to heat, friction, concussion and others, and involves risk for storage and handling, in particular, involves risk on kneading with a resin. In the case where a red phosphorus is blended with a resin, therefore, a commercially available red phosphorus is scarcely employed without treatment, and is usually employed by a stabilizing treatment with forming a coating layer on the red phosphorus. Even if such a stabilizing treatment has been conducted, however, the red phosphorus is reacted with moisture or oxygen in air to form a toxic gas, phosphine, albeit only slightly, thereby adversely affecting not only environment but also safe and stable operation of an electric or electronic device part.

Japanese Patent Application Laid-Open No. 320486/1993 (JP-5-320486A) discloses a resin composition comprising a polyester-series resin, a glass fiber, a red phosphorus, a polypropylene-series resin, and a compatibilizing agent for the polyester-series resin and the polypropylene-series resin, and having high flame retardancy and tracking resistance. Moreover, Japanese Patent Application Laid-Open No. 290484/2000 (JP-2000-290484A) discloses a resin composition comprising a polyester-series resin, a red phosphorus, a melamine salt of a cyanuric acid, and a zinc borate, and having excellent flame retardancy, mechanical properties and tracking resistance.

However, when shaped articles obtained from these materials are applied to electric or electronic device parts, metal members of the electric or electronic device parts are extremely corroded thereby providing the article with inadequate assurance of performance or reliability. Moreover, in accordance with miniaturization of electric or electronic device parts, high flowability has been recently required for resin materials.

It is, therefore, an object of the present invention to provide a flame-retardant resin composition, and a shaped article thereof, having high safety or reliability and being rendered flame-retardant to a high level.

It is another object of the invention to provide a flame-retardant resin composition, and a shaped article thereof, having high tracking resistance and electric insulation, being capable of inhibiting staining on a mold (mold staining), and having excellent moldability.

It is still another object of the invention to provide a flame-retardant resin composition, and a shaped article thereof, being capable of inhibiting generation of a gas component and corrosion of metal parts or members even using a red phosphorus.

### DISCLOSURE OF THE INVENTION

The inventors of the present invention made intensive studies to achieve the above objects and finally found that addition of a red phosphorus, a specific flame-retardant auxiliary (or specific flame-retardant synergist), and a compound having a specific standard electrode potential in combination to an aromatic polyester-series resin realizes effective inhibition of generation of a gas component such as phosphine, and improvement of tracking resistance, thereby imparting flame retardancy to such a resin composition with a high level. The present invention was accomplished based on the above findings.

That is, the flame-retardant resin composition of the present invention comprises an aromatic polyester-series resin (A); a red phosphorus (B); a flame-retardant auxiliary (C) composed of a metal salt of a boric acid (C-1) and a melamine salt of a cyanuric acid (C-2); and a compound (D) having a standard electrode potential of not less than +0.4 V in aqueous solution system at 25°C. The flame-retardant resin composition may further comprise an inorganic filler (E) and/or an olefinic resin (F). The olefinic resin (F) may have a melt flow rate of 10 to 100 g/10minutes based on JIS K7210 (for example, at 230°C under load of 21.2 N). The aromatic polyester-series resin (A) may comprise a homo- or co-polyester having a C₂₋₄ alkylene terephthalate unit. The red phosphorus (B) may comprise a stabilized red phosphorus (in particular a stabilized red phosphorus obtainable by coating a spherical red phosphorus particle with a thermosetting resin). The metal salt of a boric acid (C-1) may comprise a zinc borate, a calcium borate and others (in particular, e.g., a hydrate of a zinc borate, a hydrate of a calcium borate). The melamine salt of a cyanuric acid (C-2) may comprise a melamine cyanurate. The compound (D) may comprise a particulate (e.g., a particulate having a particle size of not more than 74 µm) which passes through a sieve having 200-mesh as Tyler standard screen scale. The inorganic filler (E) may comprise a fibrous inorganic filler. The olefinic resin (F) may comprise at least one resin selected from the group consisting of an ethylene-series resin and a propylene-series resin.

The present invention also includes a shaped article for an electric or electronic device part, which is formed with the flame-retardant resin composition.

### BEST MODE FOR CARRYING OUT THE INVENTION

### [(A) Aromatic polyester-series resin]

The aromatic polyester-series resin includes a homopolyester or copolyester obtained by, a polycondensation of a dicarboxylic acid component (e.g., an aromatic dicarboxylic acid such as terephthalic acid, isophthalic acid and naphthalenedicarboxylic acid) and a diol component (e.g., a C₂₋₆alkylene glycol such as ethylene glycol, trimethylene glycol, propylene glycol and 1,4-butanediol, and 1,4-cyclohexanedimethanol), a polycondensation of a hydroxycarboxylic acid or a lactone, a polycondensation of these components, or others.

Exemplified as the aromatic polyester-series resin is a homo- or copolyester having an alkylene arylate unit such as a 1,4-cyclohexane dimethylene terephthalate, a C₂₋₄alkylene terephthalate and a C₂₋₄alkylene naphthalate. Among others, preferred are a polyC₂₋₄alkylene terephthalate-series resin such as a polyethylene terephthalate-series resin (PET-series resin) and a polybutylene terephthalate-series resin (PBT-series resin), and a polyC₂₋₄alkylene naphthalate-series resin, particularly a PBT-series resin. In the copolyester, the content of the alkylene arylate unit including the 1,4-cyclohexane dimethylene terephthalate, C₂₋₄alkylene terephthalate, or C₂₋₄alkylene naphthalate may be about 70 to 100 mole%, and preferably about 80 to 100 mole%.

The PBT-series resin includes, for example, a polybutylene terephthalate or a copolyester containing butylene terephthalate as a main component, and is obtained by polycondensation of a dicarboxylic acid component containing terephthalic acid, and a diol component containing 1,4-butanediol. The proportions of terephthalic acid in the total carboxylic acid components and 1,4-butanediol in the total diol components are respectively not less than 80 mole%, preferably not less than 90 mole%.

In the PBT-series resin, exemplified as a copolymerizable carboxylic acid component includes, for example, an aromatic dicarboxylic acid such as isophthalic acid, naphthalenedicarboxylic acid, diphenyldicarboxylic acid, diphenyletherdicarboxylic acid, diphenoxyethanedicarboxylic acid, diphenylketonedicarboxylic acid, and diphenylsulfonedicarboxylic acid; an aliphatic dicarboxylic acid such as succinic acid, adipic acid and sebacic acid; an alicyclic dicarboxylic acid such as cyclohexanedicarboxylic acid, tetraline dicarboxylic acid and decaline dicarboxylic acid; and the like.

The copolymerizable diol component includes, for example, an aliphatic diol such as ethylene glycol, hexamethylene glycol and neopentyl glycol; an alicyclic diol such as cyclohexane dimethanol, tricyclodecane dimethylol; an aromatic diol such as xylylene glycol, a bisphenol (e.g., bisphenol A, bisphenol AD, bisphenol F and bishydroxyethoxybisphenol A).

Moreover, as far as the PBT-series resin is not substantially deteriorated in moldability, the PBT-series resin may be copolymerized with a polyfunctional compound, for example, a polyhydric alcohol such as glycerin, trimethylolpropane and pentaerythritol; and a polyfunctional carboxylic acid such as trimellitic acid, trimesic acid and pyromellitic acid.

The intrinsic viscosity of the PBT-series resin (calculated in accordance with the values measured in orthochlorophenol at 25°C) is about 0.3 to 0.8 dl/g, and preferably about 0.4 to 0.8 dl/g. When the intrinsic viscosity is too large, flowability of the resin is deteriorated, and when it is too small, mechanical strength thereof is deteriorated.

### [(B) Red phosphorus]

As the red phosphorus, particulate or powdered one is employed. Moreover, to improve stability, the red phosphorus is preferably used as a stabilized red phosphorus obtained by forming a coating layer thereon. The stabilization treatment of the red phosphorus is usually carried out by forming at least one coating layer on the red phosphorus particle. As the coating layer, both of an organic material (e.g., a resin such as a thermosetting resin and a thermoplastic resin) and an inorganic material (e.g., a metal compound such as a metal hydroxide and a metal oxide) may be used.

The thermosetting resin for coating the surface of the red phosphorus includes, for example, a phenolic resin, an amino resin (such as a melamine-series resin and a urea-series resin), an alkyd resin, an unsaturated polyester-series resin, an epoxy resin, a vinyl ester resin, a silicone-series resin, and a polyimide-series resin. The thermoplastic resin includes, for example, a polyester-series resin, a polyamide-series resin, an acrylic resin, and an olefinic resin. Examples of the metal hydroxide are aluminum hydroxide, magnesium hydroxide, calcium hydroxide, zinc hydroxide, titanium hydroxide, and others. Examples of the metal oxide are aluminum oxide, magnesium oxide, zinc oxide, titanium oxide, zirconium oxide, copper oxide, iron oxide, molybdenum oxide, tungstic oxide, manganese oxide, tin oxide, and others.

Further, the coating process includes a process in which the surface of the red phosphorus is coated with metal (e.g., iron, nickel, copper, aluminum, zinc, manganese, tin, titanium, zirconium) or an alloy thereof for stabilization by electroless plating. Other coating processes include a process in which the red phosphorus is treated with a solution of a metal salt (e.g., a salt of aluminum, magnesium, zinc, titanium, copper, silver, iron, nickel) to form a metal-containing phosphorus compound on the red phosphorus surface for stabilization.

Among others, the coating layer of the red phosphorus particle may be preferably formed with the thermosetting resin. Further, the red phosphorus particle may be coated with the coating layers in combination with a coating layer(s) of a metal component(s). Particularly preferred is a red phosphorus particle which is coated with a layer of the metal component covered by at least one layer (particularly a plurality of layers or multi-layers) of the thermosetting resin. The red phosphorus particle (powder) coated with the thermosetting resin is significantly improved in view of safety (such as handling) compared with a simple red phosphorus. To further ensure one's safety in use, it is preferred to use the red phosphorus powder as a master batch which is melt-kneaded with a thermoplastic resin in advance.

Incidentally, the shape of the red phosphorus particle is preferably globular (spherical). The shape of the red phosphorus particle varies according to production process thereof. For example, a red phosphorus particle produced through a crushing step is in the form of a particle having a crushed surface. On the other hand, a red phosphorus particle produced without a crushing step is in the form of a particle substantially not having a crushed surface (in the form of a sphere or globe). The spherical red phosphorus particle easily forms a coating layer without fracture, and thus formed coating layer hardly exfoliates. As the red phosphorus particle, therefore, the preferred one includes, for example, a globular particle (spherical particle) which is directly obtained by conversion treatment of a yellow phosphorus and is substantially without a crushed surface.

The mean particle size of the red phosphorus particle may be selected within the range of 1 to 150 µm, and the mean particle size of the stabilized red phosphorus particle may be not more than 200 µm (for example, about 3 to 200 µm), preferably about 5 to 150 µm, and more preferably about 5 to 100 µm. Use of the stabilized red phosphorus having the mean particle size in the range mentioned above can retain or maintain mechanical properties of the resin composition.

The red phosphorus (B) may be used singly or in combination.

The amount of the red phosphorus (B) may be about 1 to 20 parts by weight, preferably about 3 to 15 parts by weight, and more preferably about 5 to 10 parts by weight relative to 100 parts by weight of the aromatic polyester-series resin (A). When the ratio of the red phosphorus is too small, flame retardant effect may be deteriorated, and when the ratio is too large, mechanical properties are severely deteriorated and an amount of the generated phosphine may be increased.

### [(C) Flame-retardant auxiliary]

The flame-retardant auxiliary (flame-retardant synergist) comprises a metal salt of a boric acid (C-1) and a melamine salt of a cyanuric acid (C-2).

### (C-1) Metal salt of boric acid (metal borate)

A boric acid constituting the metal salt of the boric acid (metal borate) preferably includes a non-condensed boric acid such as orthoboric acid and metaboric acid; a condensed boric acid such as pyroboric acid, tetraboric acid, pentaboric acid and octaboric acid; and a basic boric acid. The metal may be an alkali metal, and is preferably a polyvalent metal such as an alkaline earth metal, a transition metal and the metal of the Group 2B of the Periodic Table of Elements.

The metal borate is usually a salt hydrate and includes, for example, a non-condensed borate [e.g., a non-condensed borate of an alkaline earth metal (such as calcium orthoborate and calcium metaborate); a non-condensed borate of a transition metal (such as manganese orthoborate and copper metaborate); a non-condensed borate of the metal of the Group 2B of the Periodic Table of Elements (such as zinc metaborate and cadmium metaborate), in particular metaborate], a condensed borate [e.g., a condensed borate of an alkaline earth metal (such as trimagunesium tetraborate and calcium pyroborate); a condensed salt of a transition metal (such as manganese tetraborate and nickel diborate); a condensed borate of the metal of the Group 2B of the Periodic Table of Elements (such as zinc tetraborate and cadmium tetraborate)], and a basic borate (e.g., a basic borate of the metal of the Group 2B of the Periodic Table of Elements such as basic zinc borate and basic cadmium borate). Moreover, a hydrogenborate corresponding to the borate (e.g., manganese hydrogenorthoborate) may also be employed. The metal borate (C-1) may be used singly or in combination. In particular, the borate of the alkaline earth metal or the metal of the Group 2B of the Periodic Table of Elements (a non-condensed or condensed borate), for example, a zinc borate and a calcium borate, are preferred.

The zinc borate includes zinc borate (2ZnO·3B₂O₃), zinc borate 3.5hydrate (2ZnO·3B₂O₃·3.5H₂O), and others. The calcium borate includes calcium borate (2CaO·3B₂O₃), calcium borate pentahydrate (2CaO·3B₂O₃·5H₂O), and others. Among the zinc borate and the calcium borate, a hydrate is particularly preferred.

### (C-2) Melamine salt of cyanuric acid

The melamine salt of a cyanuric acid includes an adduct of a melamine compound and cyanuric acid, isocyanuric acid or a derivative thereof (a salt of a melamine compound and cyanuric acid, isocyanuric acid or a derivative thereof). The ratio (molar ratio) of the former (the melamine compound) relative to the latter is not particularly limited, and is for example about 3/1 to 1/2 and preferably about 1/1 to 2/1 in terms of the former/the latter.

The melamine compound includes melamine or a substituted melamine (e.g., an alkylmelamine such as 2-methylmelamine, guanylmelamine), a melamine condensate (e.g., melam, melem, melon), a co-condensed resin of melamine (e.g., a melamine-formaldehyde resin, a phenol-melamine resin, a benzoguanamine-melamine resin, and an aromatic polyamine-melamine resin), guanamine or a derivative thereof (e.g., guanamine, methylguanamine, acetoguanamine, benzoguanamine, succinoguanamine, CTU-guanamine (3,9-bis[2-(3,5-diamino-2,4,6-triazaphenyl)ethyl]-2,4,8,10-tetraoxaspiro[5,5]undecane)), and others.

The cyanuric acid or a derivative thereof includes cyanuric acid, isocyanuric acid, ammeline, ammelide, and others.

As the melamine salt of a cyanuric acid, there may be mentioned, for example, a melamine salt of cyanuric acid, such as melamine cyanurate, a melem salt, melam salt, melon salt, guanamine salt corresponding to the melamine salt. The melamine salt of a cyanuric acid (C-2) may be used singly or in combination. Among others, melamine cyanurate is preferred.

The production process of the melamine salt of a cyanuric acid is not particularly limited to a specific method, and is preferably a process comprising preparing a mixture of a melamine compound and cyanuric acid or a derivative thereof as a water slurry, mixing the slurry thoroughly to form a salt of thereof in the form of a fine particle, and filtrating and drying the slurry to obtain a melamine cyanurate. Thus obtained powdered compound may include a melamine compound, cyanuric acid, isocyanuric acid or the like as a slight unreacted component.

The mean particle size of the melamine salt of a cyanuric acid is about 0.01 to 100 µm, preferably about 0.1 to 70 µm, and more preferably about 1 to 50 µm. When the mean particle size is too small, the melamine salt of a cyanuric acid tends to bring about secondary aggregation and as a result dispersibility to a resin is deteriorated. When the mean particle size is too large, flame retardancy is deteriorated.

The combination use of an aromatic polyester-series resin with a flame retardant (a red phosphorus) and flame-retardant auxiliaries (a metal borate, and a melamine salt of a cyanuric acid) realizes further improved flame retardant effect, and improved tracking resistance. Incidentally, in the case where a metal borate is used alone as a flame-retardant auxiliary, a multiplier or auxiliary (synergist) effect to flame retardancy is decreased. On the other hand, in the case where a melamine salt of a cyanuric acid is used alone, a mold (metal mold) is significantly corroded in a molding process.

The ratio (weight ratio) of the metal borate (C-1) relative to the melamine salt of a cyanuric acid (C-2) [the former(C-1)/the latter(C-2)] may be about 9/1 to 1/9, preferably about 8/2 to 2/8, and more preferably about 7/3 to 3/7 (particularly about 6/4 to 4/6).

The ratio of the flame-retardant auxiliary (C) may be about 5 to 40 parts by weight, preferably about 10 to 40 parts by weight, and more preferably about 20 to 40 parts by weight relative to 100 parts by weight of the aromatic polyester-series resin (A). In the case where the ratio of the flame-retardant auxiliary is too small, a multiplier effect to flame retardancy and tracking resistance becomes smaller. On the other hand, in the case where the ratio is too large, corrosion of the metal mold in a molding process is adversely affected significantly, and mechanical properties are also deteriorated.

### [Compound (D)]

As the compound (D), there may be used a compound having a standard electrode potential (E°) of not less than +0.4 V in aqueous solution system at 25°C. Such a compound (D) may be referred to Handbook of Chemistry (Kagaku Binran), the Basic volume II, the revised third edition (Maruzen Co., Ltd., Japan), and others. In the present invention, a halogen-free and non-toxic compound is usually employed as the compound (D). Moreover, the compound (D) may be an organic compound, and is usually an inorganic compound.

The standard electrode potential (E°) of the compound (D) may be usually selected within the range of +0.4 to +3 V, and is preferably about +0.4 to +2 V and more preferably about +0.4 to +1.5 V (particularly about +0.45 to +1.3 V). Using the compound having the standard electrode potential of not less than +0.4 V, a resin composition capable of substantially inhibiting generation of phosphine can be obtained.

As concrete examples of the compound (D), there may for example be included a copper oxide [Cu₂O (0.47), CuO (0.57)], a silver oxide [AgO (0.57), Ag₂O₃ (0.74)], a cobalt oxide [Co₃O₄ (0.78), Co₂O₃ (1.02)], a palladium oxide [PdO (0.85), PdO₂ (1.46, 1.47)], a manganese oxide [MnO₂ (0.98,1.23)], a molybdenum oxide [MoO₄ (0.86, 1.40)], Sb₂O₃ (0.86), a nickel oxide [NiO₂ (0.49, 1.59), Ni₂O₃ (1.03)], a tellurium oxide [TeO₂ (0.52)], Cr (0.55), a silver sulfate [AgSO₄ (0.65)], O₂ (0.68), quinone [C₆H₄O₂ (0.70)], a platinum oxide [PtO (0.98)], a ruthenium oxide [RuO₄ (0.99)], a polonium oxide [PoO₃ (1.47)], and a composite metal oxide [e.g., AgCrO₄ (0.45), Ag₂CrO₄ (0.46), AgCr₂O₄ (0.46), Ag₂WO₄ (0.47), Ag₂MoO₄ (0.49)]. Incidentally, just for reference, the standard electrode potentials are shown in parentheses. The compound(s) (D) may be used singly or in combination. Among the compounds, a metal oxide, for example, a copper oxide [Cu₂O, CuO] or a manganese oxide [MnO₂] is preferred from the viewpoint of handling and cost.

The compound (D) is usually employed in the form of a particulate, and the mean particle size thereof needs only be in any range as far as melt-kneading properties, moldability, flame retardancy, and properties of a shaped article may be deteriorated. For example, the mean particle size thereof is not more than 100 µm (e.g., about 0.01 to 100 µm), preferably about 0.05 to 70 µm, and more preferably about 0.1 to 50 µm. For example, as the particulate compound, it is preferred to use a particulate which passes through a sieve having not less than 200-mesh as Tyler standard screen scale (e.g., a particulate having a mean particle size of not more than 74 µm). Use of a particulate without passing through the sieve having not less than 200-mesh makes the size of the particulate larger to give insufficient suppression of phosphine generation. Further, a screw of equipment is worn away by the particulate on extruding or molding.

The purity of the compound (D) is preferably not less than 85% by weight (particular not less than 90% by weight). The purity of each compound can be measured in accordance with quality grade of a reagent in JIS (Japanese Industrial Standards). In the case where the purity of the compound is less than 85% by weight, sulfate ion or the like seeps (or bleeds out) from a shaped article, and, in a shaped article for electric or electronic application, operation stability of a product (or a final product) may be sometimes reduced significantly.

Moreover, the compound (D) needs only be substantially included or present in an extrusion pellet or a shaped article. In a preliminary step for a preparation step of a resin composition, the compound (D) needs not be a compound having the above-mentioned standard electrode potential, and for example may be formed by subjecting a compound to a treatment including oxidation treatment in the preparation step.

The ratio of the compound (D) may be about 0.001 to 20 parts by weight, preferably about 0.01 to 10 parts by weight, and more preferably about 0.1 to 5 parts by weight (particular about 0.1 to 3 parts by weight) relative to 100 parts by weight of the aromatic polyester-series resin (A). When the amount of the compound (D) is too small, suppressing of phosphine generation is reduced, when the ratio is too large, a resin composition is reduced in stability thereby deteriorating mechanical properties.

### [Inorganic filler (E)]

The resin composition of the present invention further comprises preferably an inorganic filler (E) to improve effectively mechanical strength, rigidity, thermal stability, electrical properties, and others. The inorganic filler includes a fibrous filler, and a non-fibrous filler (such as a plate-like or a plate-configuration one and a particulate one).

As the fibrous filler, there may be mentioned, for example, a glass fiber, an asbestos fiber, a carbon fiber, a silica fiber, a fibrous wollastonite, a silica-alumina fiber, a zirconia fiber, a potassium titanate fiber, a metal fiber, and others.

Among the non-fibrous fillers, the plate-like (or plate-configuration) or scale-like (or scale-configuration) filler includes a kaolin, a talc, a glass flake, a mica, a graphite, a variety of metal foil, and others.

The particulate or amorphous filler includes a carbon black, a white carbon, a silicon carbide, a silica, a quartz powder, a glass bead, a glass powder, a milled fiber (such as milled glass fiber), a silicate [e.g., calcium silicate, aluminum silicate, clay, diatomite); a metal oxide (e.g., iron oxide, titanium oxide, zinc oxide, alumina); a metal carbonate (e.g., calcium carbonate, magnesium carbonate); a metal sulfate (e.g., calcium sulfate, barium sulfate); and a metal powder.

The preferred fibrous filler includes a glass fiber and a carbon fiber. The preferred non-fibrous filler includes a particulate or plate-like filler, in particular a glass bead, a mild fiber, a kaolin, a talc, a mica, and a glass flake.

The inorganic filler(s) (E) may be used singly or in combination. Among the inorganic fillers, the fibrous inorganic filler is preferred, and the glass fiber (e.g., chopped strand) is particularly preferred in view of excellent mechanical strength and thermal stability.

For practical usage of the filler, it is desirable to optionally employ a sizing agent or surface-treatment agent. Such a sizing agent or surface-treatment agent includes a functional compound. As the functional compound, there may be mentioned, for example, an epoxy-series compound, a silane-series compound, a titanate-series compound, or other agents. The preferred one includes an epoxy-series compound (particularly, a bisphenol A-based epoxy resin, a novolak-based epoxy resin).

The inorganic filler may be size-treated or surface-treated with use of the sizing agent or the surface-treatment agent. The treatment of the filler may be conducted concurrently with addition of the filler, or may have been conducted before addition of the filler.

Moreover, the amount of the functional surface-treatment agent or sizing agent to be used in combination with the filler is about not more than 5% by weight, and preferably about 0.05 to 2% by weight relative to the filler.

The ratio of the inorganic filler (E) may for example be about 1 to 300 parts by weight, preferably about 5 to 200 parts by weight, and more preferably about 10 to 100 parts by weight relative to 100 parts by weight of the aromatic polyester-series resin (A).

Further, the ratio of the inorganic filler (E) may be, in terms of the total amount of the flame-retardant auxiliary (C) and the inorganic filler (E), about 50 to 150 parts by weight, preferably about 60 to 140 parts by weight, and more preferably about 80 to 130 parts by weight relative to 100 parts by weight of the aromatic polyester-series resin (A). When the total amount of the flame-retardant auxiliary (C) and the inorganic filler (E) is within above-mentioned range, the red phosphorus (B) and the flame-retardant auxiliary (C) ensure positively an efficient impartment of flame retardancy to the resin composition. When the total amount of the flame-retardant auxiliary (C) and the inorganic filler (E) is too small, the flame retardancy is not fully expressed, while when the total amount is too large, mechanical properties and flowability of the composition are adversely affected.

### [Olefinic resin (F)]

The resin composition of the present invention preferably further comprises an olefinic resin (F) to more improve melt flowability of the resin composition, with retaining high flame retardancy and electrical properties.

The olefinic resin (F) includes, for example, a homo- or copolymer of an α-olefin (e.g., an α-C₂₋₁₀olefin such as ethylene, propylene, 1-butene, 3-methyl-1-butene, 1-pentene, 4-methyl-1-pentene, 1-hexene and 5-methyl-1-hexene).

The olefinic resin (F) may include a copolymer of an olefin and a copolymerizable monomer. As the copolymerizable monomer, there may be mentioned a diene-series compound (e.g., butadiene, isoprene), an α,β-unsaturated carboxylic acid or a derivative thereof [e.g., a (meth)acrylic acid, a meleic anhydride, a C₁₋₁₀ alkyl ester of a (meth)acrylic acid such as ethyl (meth)acrylate], a styrenic compound (e.g., styrene, α-methylstyrene, vinyltoluene) , a vinyl ester (e.g., vinyl acetate), and others. Among them, an α,β-unsaturated carboxylic acid or a derivative thereof is preferred in the viewpoint of compatibility to the PBT.

The olefinic resin (F) includes, for example, an ethylene-series resin and a propylene-series resin. As the ethylene-series resin, there may be mentioned, for example, a homo- or copolymer of an α-olefin such as a low-, middle-, or high-density polyethylene, a linear low-density polyethylene, an ethylene-propylene copolymer, an ethylene-butene-1 copolymer, an ethylene-propylene-butene-1 copolymer, and an ethylene-(4-methylpentene-1) copolymer; and a copolymer of ethylene and a copolymerizable monomer such as an ethylene-(meth)acrylic acid copolymer, an ethylene-C₁₋₁₀alkyl (meth)acrylate copolymer (e.g., an ethylene-ethyl (meth)acrylate copolymer). As the propylene-series resin, there may be mentioned, for example, a homo- or copolymer of an α-olefin such as a polypropylene, a propylene-ethylene copolymer, a propylene-butene-1 copolymer, and a propylene-ethylene-butene-1 copolymer; and a copolymer of propylene and a copolymerizable monomer such as a propylene-(meth)acrylic acid copolymer, a propylene-C₁₋₁₀alkyl (meth)acrylate copolymer (e.g., a propylene-ethyl (meth)acrylate copolymer). The propylene-series resin may have an atactic structure, or may have stereoregularity such as isotactic structure, syndiotactic structure, and a metallocene structure generated by a metallocene catalyst.

The olefinic resin (F) may be used singly or in combination. Among the olefinic resin (F), a polyethylene, a polypropylene, a propylene-ethylene copolymer, an ethylene-C₁₋₆alkyl (meth)acrylate copolymer (such as an ethylene-ethyl acrylate copolymer) and the like are preferred. The polypropylene is particularly preferred.

The olefinic resin (F) may have about 10 to 100 g/10minutes, preferably about 20 to 80 g/10 minutes, and more preferably about 20 to 60 g/10minutes as a value of a melt flow rate (MFR) based on JIS K7210 (for example, at a temperature of 230°C under load of 21.2 N (2.16 Kgf)). When the melt flow rate of the olefinic resin (F) is lower, the flowability of the composition is hardly improved, while when the melt flow rate of the resin is higher, the flame retardancy of the resin composition is deteriorated.

The amount of the olefinic resin (F) may be about 0 to 30 parts by weight (e. g. , about 3 to 25 parts by weight), preferably about 0 to 25 parts by weight (e.g., about 3 to 23 parts by weight), and more preferably about 0 to 20 parts by weight (e.g., about 5 to 20 parts by weight) relative to 100 parts by weight of the aromatic polyester-series resin (A).

### [Other additive]

The resin composition of the present invention may comprise other additive such as other flame retardant and/or flame-retardant auxiliary, a dripping inhibitor, a stabilizer (e.g., an antioxidant or a thermal stabilizer, a ultraviolet ray absorbing agent), a nucleating agent, a lubricant, an antistatic agent and a pigment, without deteriorating the effect of the invention. The additive(s) may be used singly or in combination.

As the flame retardant, there may for example be used an inorganic flame-retardant auxiliary [for example, a metal hydroxide (e.g., aluminum hydroxide, magnesium hydroxide), a metal oxide (e.g., antimony oxide, antimony tetraoxide, antimony pentaoxide), a metal salt of stannic acid (e.g., magnesium stannate, zinc stannate), an expansive graphite], a phosphorus-containing flame retardant [for example, a monomeric phosphorus-containing compound such as a salt of a phosphoric acid (phosphate); a metal hydrogenphosphate (e.g., calcium hydrogenphosphate), a phosphite, a hypophosphite, a phosphoric ester, a phosphonic ester, and a phosphinic ester; a condensate or polymer of the monomeric phosphorus-containing compound], a sulfur-containing flame retardant [for example, an organic sulfonic acid (e.g., an alkanesulfonic acid, a perfluorosulfonic acid), sulfamic acid, a salt of an organic sulfonic acid amide], a silicon-containing flame retardant [for example, an oligomer or polymer of an organosiloxane (dimethylsiloxane, phenylmethylsiloxane), a branched olganosiloxane, a modified silicone], and an alcohol-series flame-retardant auxiliary [for example, a polyhydric alcohol or an oligomer thereof (e.g., pentaerythritol, di- or tripentaerythritol), a cellulose, a saccharide].

As the flame-retardant auxiliary, for example, there may used an aromatic resin [e.g., a polyphenylene oxide-series resin, a polyphenylene sulfide-series resin, a polycarbonate-series resin, an aromatic nylon, a polyarylate-series resin, an aromatic epoxy resin, a phenolic resin (a novolak-based phenolic resin, a phenol-formaldehyde resin), an aralkyl resin, a styrenic resin, and an aromatic vinyl resin], a nitrogen-containing compound [e.g., a cyclic urea compound (such as acetyleneurea (or glycoluril)), a nitrogen-containing cyclic compound containing a phosphorus atom (e.g., melamine phosphate, melamine metaphosphate, melamine polyphosphate, a polyphosphoric acid amide, a melamine organic phosphonate, a melamine organic phosphinate), a nitrogen-containing cyclic compound containing a sulfur atom (e.g., melamine sulfate, a melamine organic sulfate), a borate of a nitrogen-containing cyclic compound (e.g., melamine borate), and the like], an expansive graphite, and others.

The dripping inhibitor is a compound for inhibiting dripping of a molten particle upon combustion, and as the dripping inhibitor, for example there may be used a fluorine-containing resin (e.g., a polytetrafluoroethylene produced by an emulsion polymerization), a silica (e.g., fumed colloidal silica).

The antioxidant or the stabilizer includes a phenol-series antioxidant (e.g., hindered phenol compound), an amine-series antioxidant (e.g., hindered amine compound, and an aromatic amine compound), a phosphorous-series stabilizer or antioxidant, a sulfur-series antioxidant, and others. Use of the antioxidant or the stabilizer ensures improvement of thermal stability.

The amount of the additives may be, in terms of individual or total amount, about 0.01 to 30 parts by weight, preferably about 0.05 to 20 parts by weight, and more preferably about 0.1 to 10 parts by weight relative to 100 parts by weight of the aromatic polyester-series resin (A).

### [Production process]

The flame-retardant resin composition of the present invention may be a particulate or powdery mixture, or a molten mixture, and may be prepared by mixing the aromatic polyester-series resin with the flame retardant, the flame-retardant auxiliary, and if necessary, other additive(s) in a conventional manner. For example, (1) a process comprising mixing each of the components, kneading and extruding the resulting mixture into pellets with a uniaxial or biaxial extruder, and molding the pellets to give a shaped article, (2) a process comprising once making pellets (master batch) different in formation from the final composition, mixing (or diluting) a predetermined amount of the pellets with other component (s), and molding the resulting pellets to give a shaped article having a specific composition, or (3) a process comprising directly charging each of the components separately or in combination into a molding machine for molding, is utilized.

Further, as a production process of pellets with an extruder, for example, the following processes are available: (1) a production process comprising precedently melt-mixing all components without a brittle or fragile filler such as a glass-series filler, and then mixing the brittle or fragile filler with the mixture; (2) a production process comprising precedently melt-mixing all components without a red phosphorus and a brittle or fragile filler such as a glass-series filler, and then mixing the red phosphorus and the brittle or fragile filler with the mixture simultaneously (in the same feed position); (3) a production process comprising precedently melt-mixing all components without a red phosphorus and a brittle or fragile filler such as a glass-series filler, and then mixing the brittle or fragile filler and the red phosphorus with the mixture sequentially (in different feed positions); and other processes. In the pellet production with use of an extruder, a small amount of a dispersing agent such as an aromatic compound or halogen-containing compound may be blended in the extrusion step. The dispersing agent may be removed from the kneaded resin through a vent-port of the extruder. Moreover, in the preparation of the composition for a shaped article, dispersion of other component(s) can be improved advantageously by mixing a powdery or particulate resin component (e.g., a powder or particulate obtained by pulverizing a part or all of the aromatic polyester-series resin) with other component(s) (e.g., a flame retardant) and melt-kneading the mixture.

Incidentally, for imparting handling, it is usable the master batch prepared by melt-mixing a non-resinous component(s) and a resinous component(s). In particular, a red phosphorus is used practically in the form of a master batch.

Moreover, a shaped article can be formed or molded by melt-mixing the flame-retardant resin composition of the present invention and molding the molten composition by a conventional manner such as extrusion molding, injection molding and compression molding. The shaped article is excellent in flame retardancy and molding processability (mold-processability), and can be utilized for various applications. For example, the shaped article is suitable for electric or electronic device parts, office automation (OA) parts, parts for electrical household appliances, mechanical device parts, automotive parts, packaging materials or cases, and others. Further, since the flame-retardant resin composition of the present invention has high tracking resistance and low corrosion behavior to metal members or parts (in particular corrosive metal such as silver), it is particularly useful for electric or electronic device parts, especially parts having a contact made of metal (for example, electric or electronic device parts having a metal unit such as a contact or a terminal).

### INDUSTRIAL APPLICABILITY

According to the present invention, the combination of the aromatic polyester-series resin with the red phosphorus, the specific flame-retardant auxiliary, and the compound having a specific standard electrode potential imparts positively a high reliability and flame retardancy to a resin composition even in small amount of a flame retardant without using a halogen-series flame retardant. Moreover, the resin composition of the present invention has high tracking resistance and electric insulation, and further inhibits mold stain to give excellent moldability. In particular, since the resin composition inhibits effectively generation of gas components and corrosion to metal members or parts (in particular silver) even if the composition includes a red phosphorus. Thus, the resin composition is useful for electric or electronic device parts having a metal unit such as a contact or a terminal.

### EXAMPLES

The following examples are intended to describe this invention in further detail and should by no means be interpreted as defining the scope of the invention. Incidentally, various properties of a resin composition were evaluated on the basis of the following tests. Each of components used for preparing a resin composition was described as below.

### [Flame retardancy]

In accordance with the vertical combustion test based on UL94, the flame retardancy was evaluated using a test piece 0.8 mm thick. The flame retardancy was classified as a level "V-0", "V-1" , "V-2", and "HB" on the basis of the valuation method described in UL94.

### [Tracking resistance]

Based on IEC Pubul. 112 (the second edition) the comparative tracking index (CTI) was determined.

### [Metal corrosion]

A sample was dried at 130°C for 5 hours to give a dried pellet. The dried pellet (3 g) was put into a 22 ml bial bottle, and a strip of silver plate was put therein, and then the bottle was tightly sealed. The sealed bial bottle was placed in an oven at 120°C for 72 hours, and the corrosion behavior was visually evaluated on the basis of the following criteria.
"A": the metal surface had luster and was not tarnish
"B" : the metal surface lost luster and was tarnish

### [Mold staining]

A test piece having a shape corresponding to a shape of a mold was continuously or successively shaped or molded (2000 shots) by using an injection molding machine according to the following conditions, and an amount of a deposit (contaminant) on the mold after continuous or successive molding (a degree of stain on the mold) was visually observed, and the mold staining was evaluated based on the following criteria.

### (Molding conditions)

Injection molding machine: IS30FPA (manufactured by Toshiba Machine Co., Ltd.)
Mold: disk having 20 mm diameter and 1 mm thickness
Cylinder temperature: 250°C
Rate of injection: 2 m/min.
Dwell pressure: 62 MPa
Mold temperature: 40°C

### (Evaluation criteria)

"A": a negligible amount of a deposit is found
"B": a deposit is found, on the basis of an area, on about 30% of the mold surface
"C" : a deposit is found, on the basis of an area, on about 50% of the mold surface

### [Intrinsic viscosity]

The intrinsic viscosity was measured with an Ostwald's viscosity tube at 35°C using o-chlorophenol as a solvent.

### [Flowability]

The melt viscosity (Pa · s) of a resin composition at 250°C of a cylinder temperature and 1216 s⁻¹ of a shear rate was measured by means of a capillary rheometer (Capirograph 1B manufactured by Toyo Seiki Seisaku-sho, Ltd.).

### [Components of resin composition]

(A) PBT: polytetramethylene terephthalate having an intrinsic viscosity of 0.75 dl/g, manufactured by Teijin Ltd.
(B) PBT-M: master batch in which a red phosphorus powder coated with a thermosetting resin (red phosphorus content: not less than 92% by weight, NOVA EXCEL 140, manufactured by Rinkagaku Kogyo Co., Ltd.) was kneaded in a polytetramethylene terephthalate (intrinsic viscosity: 0.71, manufactured by Teijin Ltd.) in a proportion of 30% by weight.
(C-1) Calcium borate: "U. B. POWDER", manufactured by Kinsei Matec Co., Ltd.
(C-1) Zinc borate: "Firebrake ZB", manufactured by Borax Japan Ltd.
(C-2) Melamine cyanurate: "MC-440", manufactured by Nissan Chemical Industries, Ltd.
(D) Copper (II) oxide: CuO passed through a sieve having 200-mesh as Tyler standard screen scale, E° = 0.570 V, purity = 90% by weight, manufactured by Kanto Kagaku, K.K.
(D) Copper (I) oxide: Cu₂O passed through a sieve having 200-mesh as Tyler standard screen scale, E° = 0. 471 V, purity = 90% by weight, manufactured by Kanto Kagaku, K.K.
(D) Manganese oxide: MgO₂ passed through a sieve having 200-mesh as Tyler standard screen scale, E° = 0.98 V, purity = 85% by weight, manufactured by Kanto Kagaku, K.K.
(D') Titanium oxide: TiO₂ passed through a sieve having 200-mesh as Tyler standard screen scale, E° = -0.502 V, manufactured by Kanto Kagaku, K.K.
(D') Cobalt oxide: CoO passed through a sieve having 200-mesh as Tyler standard screen scale, E° = 0.119 V, manufactured by Kanto Kagaku, K.K.
(D') Silicon dioxide: SiO₂ passed through a sieve having 200-mesh as Tyler standard screen scale, E° = -0.991 V, manufactured by Kanto Kagaku, K.K.
(E) Glass fiber: "T-124", manufactured by Nippon Electric Glass Co., Ltd.
(F) Polypropylene: "Grand Polypro J707ZB", manufactured by Grand Polymer Co., MFR = 40 g/10minutes
(F) Ethylene-ethyl acrylate copolymer: "EVAFLEX A713", manufactured by Du Pont-Mitsui Polychemicals Co., Ltd., MFR = 20 g/10minutes

### Examples 1 to 11 and Comparative Examples 1 to 8

The above components were mixed in a ratio (parts by weight) shown in Tables 1 to 2, and the mixture was kneaded with a biaxial extruder equipped with a vent having 44 mmφ diameter at 250°C to form a pellet with extruding in the form of a strand. The above-mentioned properties were evaluated by using the pellet. The results are shown in Tables 1 and 2.

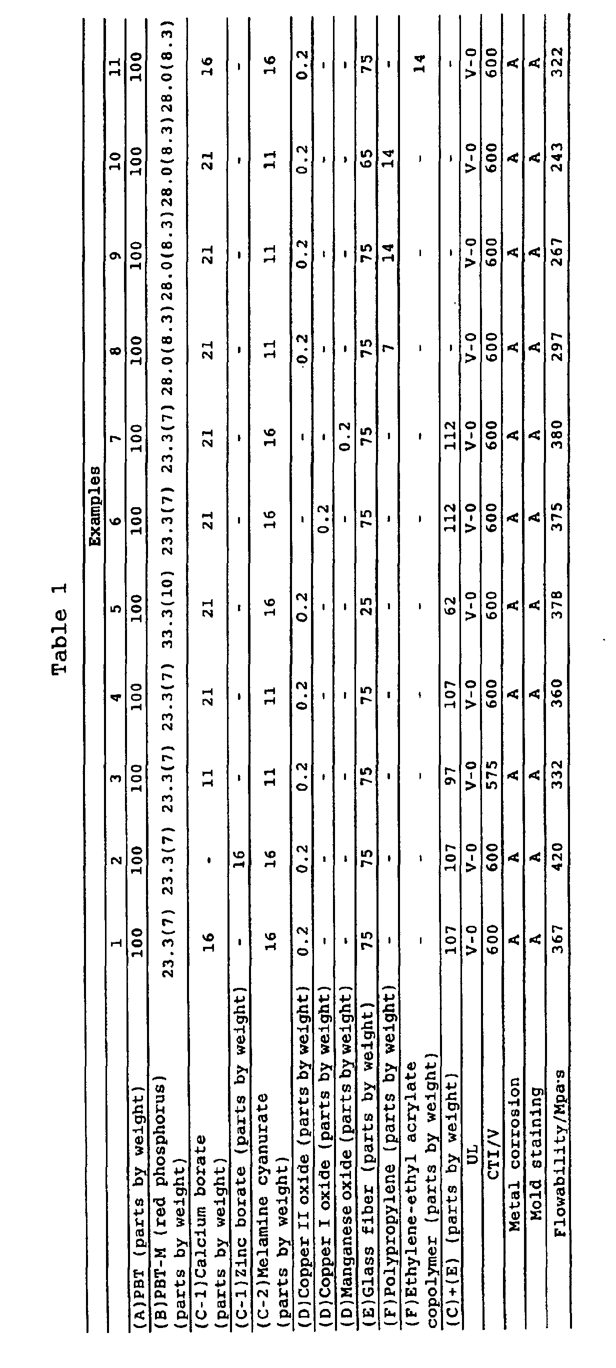

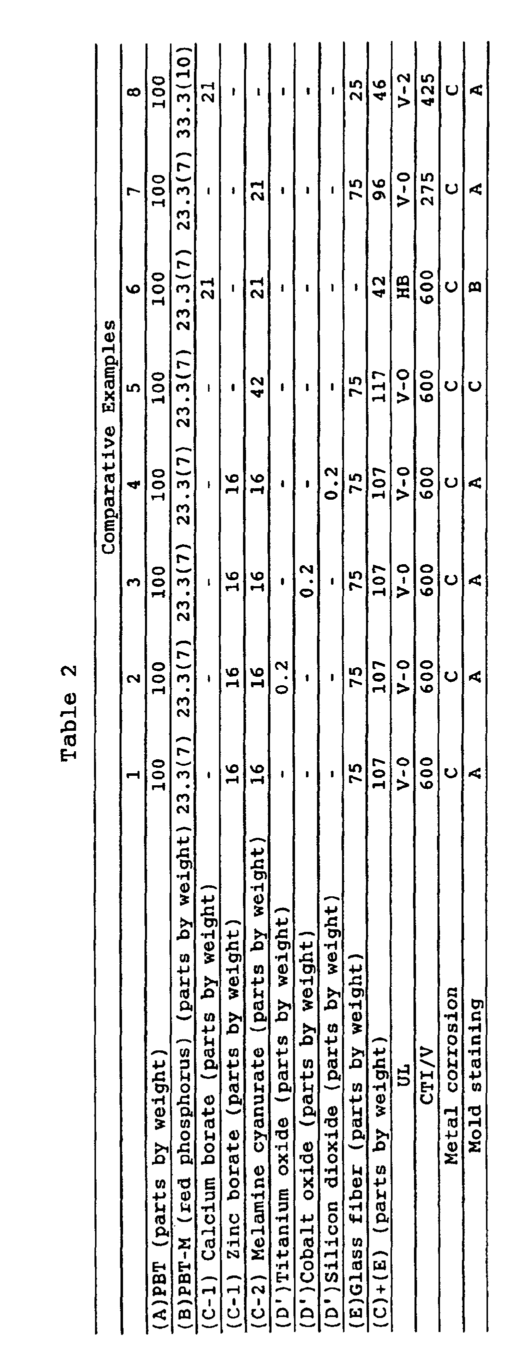

As apparent from Tables 1 and 2, the resin compositions of Examples, in which a flame retardant comprises a red phosphorus, a specific flame-retardant auxiliary and a compound having a specific standard electrode potential, is excellent in flame retardancy, tracking resistance, metal corrosion and moldability (particularly metal corrosion) compared with the resin compositions of Comparative Examples, which is free from any component(s) of the above-mentioned components.

## Claims

1. A flame-retardant resin composition, which comprises an aromatic polyester-series resin (A); a red phosphorus (B); a flame-retardant auxiliary (C) composed of a metal salt of a boric acid (C-1) and a melamine salt of a cyanuric acid (C-2); and a compound (D) having a standard electrode potential of not less than +0.4 V in aqueous solution system at 25°C.

2. A flame-retardant resin composition according to claim 1, which further comprises an inorganic filler (E).

3. A flame-retardant resin composition according to claim 1, which further comprises an olefinic resin (F).

4. A flame-retardant resin composition according to claim 3, wherein the olefinic resin (F) has a melt flow rate of 10 to 100 g/10minutes based on JIS K7210.

5. A flame-retardant resin composition according to claim 1, wherein the aromatic polyester-series resin (A) comprises a homo- or co-polyester having a C₂₋₄ alkylene terephthalate unit.

6. A flame-retardant resin composition according to claim 1, wherein the red phosphorus (B) comprises a stabilized red phosphorus.

7. A flame-retardant resin composition according to claim 1, wherein the red phosphorus (B) comprises a stabilized red phosphorus obtainable by coating a spherical red phosphorus particle with a thermosetting resin.

8. A flame-retardant resin composition according to claim 1, wherein the metal salt of a boric acid (C-1) comprises at least one member selected from the group consisting of a zinc borate and a calcium borate, and the melamine salt of a cyanuric acid (C-2) comprises a melamine cyanurate.

9. A flame-retardant resin composition according to claim 1, wherein the metal salt of a boric acid (C-1) comprises at least one hydrate selected from the group consisting of a hydrate of a zinc borate and a hydrate of a calcium borate.

10. A flame-retardant resin composition according to claim 1, wherein the compound (D) comprises a particulate which passes through a sieve having 200-mesh as Tyler standard screen scale.

11. A flame-retardant resin composition according to claim 1, wherein the flame-retardant resin composition comprises, relative to 100 parts by weight of the aromatic polyester-series resin (A), 1 to 20 parts by weight of the red phosphorus (B), 5 to 40 parts by weight of the flame-retardant auxiliary (C) and 0.001 to 20 parts by weight of the compound (D), and the weight ratio of the metal salt of a boric acid (C-1) relative to the melamine salt of a cyanuric acid (C-2) is 9/1 to 1/9.

12. A flame-retardant resin composition according to claim 2, wherein the inorganic filler (E) comprises a fibrous inorganic filler.

13. A flame-retardant resin composition according to claim 2, wherein a total amount of the inorganic filler (E) and the flame-retardant auxiliary (C) is 50 to 150 parts by weight relative to 100 parts by weight of the aromatic polyester-series resin (A).

14. A flame-retardant resin composition according to claim 3 or 4, wherein the olefinic resin (F) comprises at least one resin selected from the group consisting of an ethylene-series resin and a propylene-series resin.

15. A flame-retardant resin composition, which comprises:
a polybutylene terephthalate-series resin (A),
a stabilized red phosphorus (B),
a flame-retardant auxiliary (C) composed of at least one hydrate (C-1) selected from the group of consisting of a hydrate of a zinc borate and a hydrate of a calcium borate, and a melamine salt of a cyanuric acid (C-2),
a particulate inorganic compound (D) having a mean particle size of 0.1 to 50 µm and having a standard electrode potential of +0.4 to +3 V in aqueous solution system at 25°C,
a glass fiber (E), and
an olefinic resin (F) having a melt flow rate of 20 to 80 g/10minutes based on JIS K7210,
wherein the flame-retardant resin composition comprises, relative to 100 parts by weight of the polybutylene terephthalate-series resin (A), 3 to 15 parts by weight of the red phosphorus (B), 10 to 40 parts by weight of the flame-retardant auxiliary (C), 0.01 to 10 parts by weight of the inorganic compound (D), 1 to 300 parts by weight of the glass fiber (E), and 0 to 25 parts by weight of the olefinic resin (F), and the weight ratio of the hydrate (C-1) relative to the melamine salt of a cyanuric acid (C-2) is 8/2 to 2/8.

16. A shaped article for an electric or electronic device part, which is formed with a flame-retardant resin composition recited in claim 1.
